# EUROPEAN PATENT APPLICATION

(11) **EP 0 685 435 A2**
(43) Date of publication of application: **06.12.1995**
(21) Application number: 95303307.3
(22) Date of filing: 17.05.1995
(51) Int. Cl.: C04B 35/00, C08K 3/00, B01J 37/00

(54) **Method for making powders of inorganic compounds**

(30) Priority: 31.05.1994 US 251864
(71) Applicant: ROHM AND HAAS COMPANY, Philadelphia, Pennsylvania 19106-2399 (US)
(72) Inventor: Gallagher, Michael Kenrick, Lansdale, Pennsylvania 19446 (US); Manziek, Larry, Lansdale, Pennsylvania 19446 (US); Langenmayr, Eric Jon, Laverock, Pennsylvania 19118 (US)
(74) Representative: Smith, Julian Philip Howard

(57) **Abstract**

Powders of inorganic compounds and a method for preparing powders of inorganic compounds are provided. The powders are prepared by removing the polymer from 'metal-loaded' polymers. The powders of inorganic compounds can be used in the manufacture of catalysts, emissivity coatings, ceramics, pigmented materials, and advanced electronic and optoelectronic materials.

## Description

The present invention relates to a method for making powders of inorganic compounds.

As used herein, "inorganic compounds" refers to metals, metallic alloys, metal oxides, metal borides, metal carbides, metal silicides, metal nitrides, metal sulfides, metal selenides, and mixtures thereof.

In the manufacture of ceramics, powdered metals, and catalysts, it is desirable to control the ratio of one or more inorganic compounds contained therein. It is also desirable to control the size of particles of the powdered inorganic compounds because the size of the inorganic compounds affects the physical and chemical properties in many applications. The inability to control the size of powders of inorganic compounds has been a persistent problem in the manufacture of high performance materials.

Many applications require particular stoichiometric ratios of one or more inorganic compounds. Many attempts have been made to control the stoichiometric ratios by techniques such as sputtering, precipitation and sol-gel processing. Sputtering is a complex technique, requiring the use of expensive equipment and difficult operating procedures. Sol-gel processing and precipitation techniques both suffer from limitations due to the relative solubilities of the various metals salts and metal alkoxides. Furthermore, controlling the stoichiometric ratios of two or more metals or metal oxides using sol-gel processing is complicated by the differing hydrolysis or precipitation rates of the precursors.

Certain applications, such as structural ceramics, electronic ceramics and corrosion resistant alloys, benefit from the control of particle size of the powders of inorganic compounds containing the one or more metals, metal oxides and mixtures thereof. Previous methods for controlling the size of powders of inorganic compounds having a diameter below about 100 nanometers are complex, expensive and cumbersome.

Bahnemann describes in Israel Journal of Chemistry, vol.33,pp.115-136(1993) several methods for preparing ultra-small metal oxide particles. The methods described by Bahnemann are colloidal processes. These methods are complex and require many steps.

The present invention seeks to overcome the problems associated with known methods for controlling the particle size of powders of inorganic compounds.

In a first aspect of the present invention, there is provided a method for making a powder of inorganic compounds, comprising:
(a) forming one or more metal-loaded polymers by loading one or more soluble metal compounds into each of one or more polymers, wherein each of the one or more polymers has a particle size in the range of from 10 nanometers to 15,000 nanometers;
(b) removing the one or more polymers to form a powder of inorganic compounds.

Polymers useful in the present invention have a particle size in the range of from 10 nanometers to 15,000 nanometers, preferably from 30 to 12,000 nanometers, and most preferably from 50 to 10,000 nanometers. If the polymers are too small, they are difficult to work with because they tend to agglomerate.

A suitable process for preparing polymers having a particle size in the range of from 10 nanometers to 15,000 nanometers is, for example, by an emulsion polymerization processes. Polymers prepared by emulsion polymerization processes are referred to hereinafter and in the appended claims as "emulsion polymers." Emulsion polymerization processes are well known to those of ordinary skill in that art. For example, in US-A-4,359,537, to Chong (hereafter "Chong"), teaches an emulsion polymerization process for producing emulsion polymers useful in the present invention. The emulsion polymers taught by Chong are functionalized polymers prepared by emulsion polymerization processes having particle sizes in the size range which is useful for the present invention.

Other suitable processes for preparing polymers having a particle size in the range of from 50 nanometers to 15,000 nanometers include, for example, grinding or pulverizing ion-exchange resins prepared by suspension polymerization processes, and grinding or pulverizing polymers prepared by bulk polymerization. Polymers prepared by suspension polymerization processes are referred to hereinafter and in the appended claims as "suspension polymers." Suspension polymerization processes are well-known to those skilled in the art, and include, for example, processes for making gellular resins and macroreticular resins such as those taught in US-A-4,382,124, 4,4486,313, 4,501,826 and 4,224,415 to Meitzner, et al.

The polymers useful in the present invention may be of any morphology. For example, the polymers may be spherical, irregularly shaped, rod-like, hollow, core/shell, oblate or multilobal. Preferably, the polymers are substantially spherical. Furthermore, the polymer may be used in the form of an emulsion, suspension or powder.

The polymers useful in the present invention preferably contain functional groups capable of complexing with the one or more soluble metal compounds. When present, the one or more functional groups of the polymers useful in the present invention may result, for example, from: the use of functional monomers; the use of monomers which contain protected (or latent) functional groups which are subsequently deprotected; functionalizing non-functional moieties of the polymer after polymerization; or a combination thereof. Suitable functional groups include, for example, weakly acidic, strongly acidic, weakly basic, strongly basic, reducing, or coordinating functional groups. In other words, polymers may be prepared as ion exchange resins or polymeric adsorbents. Furthermore, polymers can be functionalized directly, as by hydrolysis, sulfonation, and similar reaction, or indirectly by such reactions as chloromethylation followed by a functionalization reaction such as amination.

In general, the reactions employed to functionalize emulsion copolymer ion exchange resins are the same as those used to produce ion exchange resins from conventional, suspension-polymerized copolymers. As a high degree of functionalization is desirable because it produces a large number of functional ion exchange sites per unit weight of resin, the polymers useful in the present invention are preferably functionalized to between 0.1 and 2.0 functional groups per monomer unit. The more preferred range is from 0.3 to 1.2 functional groups per monomer unit. The term, "functional groups per monomer unit", as used herein, refers to the number of functional groups per total monomer units, both "backbone", monoethylenically unsaturated monomer and crosslinking, polyethylenically unsaturated monomer. For example, in the case of an aromatic backbone monomer and aromatic crosslinker monomer used to prepare a copolymer, this term would refer to the number of functional groups per aromatic ring in the polymer. Similarly, in the case of a copolymer with a functionalized acrylic backbone and an unfunctionalized aromatic crosslinker, the degree of functionalization will be the functional ion exchange groups per total monomer units, both acrylic and aromatic. The degree of functionalization may be thought of as the number of functional groups per mole of all the monomers which constitute the polymer. Some of the typical processes for functionalizing the polymer are described in paragraphs (a)-(d) below:
(a) Strongly acidic polymers may be prepared, for example, by heating styrene-containing or substituted styrene-containing polymers with concentrated sulfuric acid to produce a sulfonic acid-functionalized polymer.
(b) Weakly acidic polymers may be prepared, for example, by hydrolyzing crosslinked acrylic ester emulsion copolymers with alkali metal hydroxide solutions to form carboxylic acid-functionalized polymers. The carboxylic acid-functionalized polymer produced by this procedure is in the alkali metal form and may be converted to the free acid (hydrogen) form by contacting it with a conventional, strongly acidic cation polymer in the hydrogen form. Similarly, acrylic ester polymers may be hydrolyzed with strong acids to produce carboxylic acid-functionalized polymers in the hydrogen form.
(c) Strongly basic polymers may be prepared, for example, by chloromethylating styrene-containing emulsion polymers with chloromethyl methyl ether in the presence of a Lewis acid such as aluminum chloride, and treating the resulting intermediate polymer with a tertiary amine such as trimethylamine to form a quaternary amine chloride functional group. Alternatively, a strongly basic quaternary amine polymer may be prepared by treating a crosslinked acrylic ester polymer with a diamine containing both a tertiary amine group and a primary or secondary amine group, such as dimethylaminopropylamine or di(3-dimethylaminopropyl)amine and quaternizing the resulting weakly basic polymer with an alkyl halide such as methyl chloride.
(d) Weakly basic polymers may be prepared, for example, in the same manner described for strongly basic resins, except that for a styrene polymer, primary or secondary amines are employed instead of tertiary amines, and for an acrylic ester polymer, the polymer is not quaternized with an alkyl halide.

Soluble metal compounds suitable for the present invention include inorganic compounds which are at least partially soluble in the polymer matrix or in an aqueous polymer emulsion or dispersion. Preferably, the one or more soluble metal compounds are completely soluble in the aqueous polymer emulsion or dispersion. Suitable metals include alkali, alkaline earth, transition, main group and lanthanide metals. The choice of the soluble metal compounds will depend upon which metal(s) or metal oxide(s) are desired in the final powder of inorganic compounds. For example, if the desired final product is a catalyst, the preferred inorganic metal compounds are those of catalytically active metals or metal oxides. Preferred catalytically active metals or metal oxides include platinum, palladium, rhodium, rhenium, ruthenium, osmium, iridium, cerium, zirconium, titanium, vanadium, molybdenum, tungsten, lanthanum, aluminum, yttrium, nickel, tin, bismuth, copper, cobalt, iron, silver, gold, salts, oxides, and mixtures thereof. Examples of suitable soluble metal ions include Ce³⁺, Ni²⁺, Zr⁴⁺, La³⁺, Al³⁺ and Y³⁺. Examples of suitable soluble metal complexes include RuCl₃, RhCl₃, [PtCl₆]²⁻,[Pt(NH₃)₄]²⁺, [PdCl₄]²⁻, Fe(CO)₄⁻, [Ru(NH₃)₆]³⁺, [MoO₄]²⁻, and [Mo₆O₁₉]²⁻. Examples of suitable soluble organometallic compounds include ferrocene, Pt(PPh₃)₄, [Pt(NH₃)₂(C₂H₄)]²⁺.

As stated above, the one or more soluble metal compounds are loaded into the polymer to form a metal-loaded polymer. "Loading" a polymer with one or more soluble metal compounds refers to combining the polymer with the one or more soluble metal compounds so that either the functional groups of the polymer are complexed with one or more soluble metal compounds, or the polymer matrix solubilizes the one or more soluble metal compounds, or a combination thereof. Complexing between the polymer and the one or more soluble metal compounds may occur by such mechanisms as, for example, ion-exchange, chelation, oxidative addition, π-bonding, hydrogen bonding and dative bonding. Soluble metal compounds are preferably introduced into, onto, and throughout the polymers utilizing the ion exchange properties of a polymer. When a metal salt is used, following the ion exchange of the metal salt into, onto and throughout the polymer, it is possible, although not necessary, to reduce the metal salt using any suitable reducing agent. The distribution of the one or more soluble metal compounds may depend on the structure of the polymer used. For example, if a polymer having a core/shell morphology is used, the concentration of soluble metal compounds in the core may differ from the concentration of soluble metal compounds in the shell because of, for example, different types or degrees of functionality in the core relative to the shell. Preferably, the soluble metal compounds are distributed uniformly throughout the polymer matrix. The soluble metal compounds are preferably introduced into, onto and throughout the polymer by simply mixing a colloidal dispersion or emulsion of the polymers with the soluble metal compounds. It is understood by those of ordinary skill in the art that the polymer dispersion or emulsion should be in a suitable form such that the soluble metal compounds will complex with the polymer. For example, if a carboxylic acid-containing polymer is used, the pH of the polymer (or polymer emulsion or polymer dispersion) should be greater than 8 to deprotonate the carboxylic acid groups so that the polymer can complex with soluble cationic metals or metal complexes. Preferably, the one or more soluble metal compounds are loaded into the polymer by forming an aqueous mixture of from 0.1 to 70 percent by weight of the polymer and the one or more soluble metal compounds, and wherein the polymer and the one or more soluble metal compounds are present in a weight ratio in the range of from 1:0.001 to 1:3. More preferably, the one or more soluble metal compounds are loaded into the polymer by forming an aqueous mixture of from 1 to 40 percent by weight of the polymer and the one or more soluble metal compounds, and wherein the polymer and the one or more soluble metal compounds are present in a weight ratio in the range of from 1:0.01 to 1:1.

After the one or more soluble metal compounds have been loaded into the polymer, it may be desirable to reduce or precipitate them in the metal-loaded polymer. The metal-loaded polymer may then be loaded with additional soluble metal compounds. In the case of metal ions and metal complexes of gold, copper, silver, and metals of the platinum group, it is possible to reduce these metal ion and metal complexes to their corresponding metal. This can be accomplished by any suitable reducing agent such as, for example, hydrogen, formaldehyde, hydrazine, carbon monoxide, formic acid and other reducing agents well known to those skilled in the art. It is also possible that the polymer may contain functional groups capable of reducing the soluble metal compounds to the metal. For example, the polymers disclosed in US-A-4,355,140, to Manziek, are capable of reducing certain soluble metal compounds to the corresponding metals.

The metal-loaded polymers are preferably isolated prior to removing the polymer. Suitable methods for isolating the metal-loaded polymer include, for example, spray-drying, freeze-drying, evaporating, filtering, flocculating, precipitating, centrifuging and dialyzing.

In one embodiment of the invention, powders of inorganic compounds are prepared from soluble metal compounds. In another embodiment of the present invention, powders of inorganic compounds are prepared from two or more metal-loaded polymers, each containing one or more soluble metal compounds. In the event two or more metal-loaded polymers are used, the metal-loaded polymers are mixed prior to the removal of the polymers. The two or more metal-loaded polymers can be mixed as emulsions, suspensions or dispersions. If the metal-loaded polymers are isolated, they can be mixed in their isolated forms.

The metal-loaded polymer is removed to form powders of inorganic compounds. Suitable methods for removing the polymer include, for example, pyrolysis, dissolution, chemical degradation, irradiation and sonication. Preferably, the polymer is removed by pyrolysis. If the pyrolysis is conducted in an oxidizing atmosphere, such as air or nitrogen oxides, the polymer is preferably completely removed to form powders of inorganic compounds. If the pyrolysis is conducted in an inert atmosphere, such as nitrogen or argon, the polymer is converted into a carbonaceous material containing the metals or metal oxides. If the pyrolysis is conducted in a reducing atmosphere, such as silane (SiH₄), diborane (B₂H₆) or ammonia, the polymer is converted into a carbonaceous material containing the inorganic compounds, and the inorganic compounds can be converted to metals or the corresponding metal/heteroatom compound. Preferably, the pyrolysis is conducted in an oxidizing atmosphere at a temperature of from 250°C to 1,000°C for from 1 minute to 24 hours.

In addition to removing the polymer, the pyrolysis may cause the soluble metal compounds from the metal-loaded polymer to sinter together. If desired, the powders of inorganic compounds can be subjected to higher temperatures or maintained at an elevated temperature for a longer period of time to allow the formation of larger powders of inorganic compounds. The powders of inorganic compounds may be crystallites of a single metal or metal oxide species, or if more than one type of soluble metal compound was used in the metal-containing polymers, the powders of inorganic compounds may contain two or more metals or metal oxides in any of several phases including amorphous structures, crystalline structures, or combinations thereof.

The powders of inorganic compounds generally have a diameter of from 0.4 nanometers to 1,000 nanometers, preferably from 0.8 nanometer to 700 nanometers. The size of the powders of inorganic compounds may depend on such factors as the pyrolysis conditions, the polymer size and composition or the level at which soluble metal compounds are present in the metal-loaded polymer. The size of the powders of inorganic compounds may be affected by the pyrolysis conditions, for example, by increasing the temperature which may result in an increase in the size of the powders of inorganic compounds and oxidative conditions generally result in an increase in the size of the powders of inorganic compounds. The size of the powders of inorganic compounds may also be affected by the polymer composition, for example, certain functional groups, such as sulfonic acid, may lead to sintering of powder particles during pyrolysis.

The powders of inorganic compounds may contain two or more metals or metal oxides and will generally reflect the stoichiometry of the soluble metal compounds present in the metal-loaded polymer or polymers. For example, if metal-loaded polymers are prepared with yttrium, barium and copper in a molar ratio of 1:2:3, the powders of inorganic compounds formed as a result of the removal of the polymer will also have a molar ratio of yttrium to barium to copper of 1:2:3.

The present invention may also produce powders of inorganic compounds which contain alloys or solid solutions of two or more inorganic metals or metal oxides. For example, gold and platinum can be present in the same or different metal-loaded polymer, which when pyrolyzed may result in powders of inorganic compounds of an alloy. The formation of alloys may also be controlled, in part, by the pyrolysis conditions.

The powders of inorganic compounds formed by the present invention may be crystalline or amorphous. The crystalline phases may be different from the crystalline phases formed by other processes because they may be generated from different intermediates, or because the presence of the polymer may affect the resulting crystalline phase. Furthermore, the crystalline phase formed by the present invention may or may not be thermodynamically stable. It should also be noted that the crystalline phase can be changed by subjecting the powders of inorganic compounds to elevated temperatures. The present invention can be used, for example, to prepare powders of zirconium oxide in a crystalline phase selected from tetragonal, cubic and a combination thereof, wherein the zirconium oxide contains less than about 3 percent by weight of any phase stabilizers, and is preferably substantially free of any phase stabilizers.

The powders of inorganic compounds formed by the present invention may be thermally stable to sintering as shown by the lack of significant grain growth after exposure to elevated temperatures. The stability of the powders of inorganic compounds may, for example, be increased by the presence of grain growth inhibitors which may be intentionally added or inadvertently present. When grain growth inhibitors are intentionally present, they may be introduced, for example, as a component of the metal-loaded polymer.

The ability to be able to form powders of inorganic compounds of controlled stoichiometry is useful in the manufacture of catalysts, for example, as catalysts for the conversion of exhaust gases from combustion sources such as, for example, automobile, diesel and stationary engines. Many automobile exhaust catalysts are prepared by depositing powders of inorganic compounds of catalytic metals on a honey-combed monolith as the catalyst support. The ability to control the size and stoichiometry of domains is also useful in the manufacture of fuel cells, chemical process catalysts, phase transfer catalysts, electrodes and sensors.

The present invention may also be useful, for example, to prepare emissivity coatings. Certain metals and metal oxides are known to reflect or adsorb microwave radiation and radio frequencies. The present invention can be used to prepare powders of such metals and metal oxides which can be deposited on surfaces where such properties are desired. For example, the interior surfaces of microwave ovens and electronic devices can be coated with powders of inorganic compounds prepared by the present invention to render the surfaces impenetrable to microwave radiation or radio frequencies.

The present invention may also be useful, for example, in preparing toner particles and other pigmented materials including, for example, cosmetic formulations, paints, lacquers, stains and other colored coatings.

The present invention is also useful in preparing advanced ceramic materials, including advanced electronic and optoelectronic ceramic materials. The present invention allows for the formation of powders of inorganic compounds of mixed metal and mixed metal oxides of controlled stoichiometry and size. A specific mixed metal oxide is, for example, YBa₂Cu₃O₍₇₋ₓ₎, a well-known high temperature superconductor composition. The present invention can also be used to prepare other materials for electronic applications such as piezoelectric, ferroelectric, and non-linear optic materials. Some examples of these ceramics include, BaTiO₃, PZLT (lanthanum-doped lead zirconium titanate), and LiNbO₃.

### EXAMPLES

The following is a general procedure suitable for preparing a styrene divinylbenzene emulsion polymer having a particle size in the range of from 10 to 15,000 nanometers. A monomer emulsion is prepared by stirring vigorously under a nitrogen atmosphere 370 g of deoxygenated water, 48.2 g of the sodium salt of an alkyl aryl polyether sulfonate surface-active agent containing 28% solids, 348.8 g of styrene and 51.2 g of commercial-grade divinylbenzene (54.7% divinylbenzene, balance essentially ethylvinylbenzene). An aqueous initiator solution is prepared by dissolving 2.0 g of potassium persulfate in 100 g of deoxygenated water, and 50 g of the monomer solution is added to the initiator solution. The mixture is stirred to develop a 1-inch vortex and is heated to 70°C under the nitrogen atmosphere. When polymerization begins, as evidenced by a sudden decrease in opacity, the remaining monomer emulsion is added over a period of 1.5 hours. The temperature is held at 70°C for one hour after the addition is completed. The polymer emulsion is cooled to room temperature and filtered through cheesecloth. If desired, the emulsion polymer prepared above can, for example, be sulfonated to produce a strong acid resin, or it can be chloromethylated and quarternized with, for example, methyl chloride or methyl iodide to form a strong base emulsion polymer.

### Example 1 - Preparation of Ruthenium Oxide Powder Using a Weak Acid Emulsion Polymer

A metal-loaded emulsion polymer was formed by adding to a flask 1.62 liters of a 16.2 percent by weight aqueous emulsion of the ammonium ion salt of an emulsion polymer (average particle size of 100 nm) having a monomer composition of 38.1 percent by weight of methacrylic acid, 57.1 percent by weight of ethylacrylate and 4.8 percent by weight of allylmethacrylate, and pipetting into the flask 1.0 g of ruthenium as a RuCl(NH₃)₅²⁺ aqueous solution to achieve a loading level of 0.01g of ruthenium per gram of polymer.

A flocculating aid was prepared as follows: a styrene-divinylbenzene emulsion copolymer was prepared by a conventional emulsion polymerization process; the resulting copolymer was chloromethylated and functionalized with trimethylamine to produce a quarternized strong-base functionalized polymer.

Approximately 35 g of the flocculating aid was added to the metal-loaded polymer emulsion to produce a floc which was collected via filtration. The floc was then heated in a glass crystallizing dish covered with a larger watchglass in air at 250°C for one hour followed by heating at 350°C for 4 hours. 1.21g of blue-black powders of inorganic compounds was obtained. X-ray diffraction determined that the primary phase of the powder was RuO₂, with ruthenium metal (Ru⁰) as a minor component. Further heating of the powder to 500°C in air converted the minor component of ruthenium metal to ruthenium dioxide.

The surface area of the powder was 90-100 m²/g as measured by BET-nitrogen porosimetry with no measurable microporosity. The density of the powder was determined by helium pycnometry to be 5.15 g/cc as compared with a theoretical density of 6.97 g/cc. The powder was imaged by scanning electron microscopy which showed the powder to have a primary particle size of less than 10 nm. The calculated particle size based on surface area and density was 5.8 nm.

### Example 2 - Yttrium Copper Barium Oxide Powder (Stoichiometric Mixing of Three Components)

### Loading of Copper

A macroreticular styrene-divinylbenzene copolymer was prepared by a conventional suspension polymerization process. The resulting suspension polymer was chloromethylated and functionalized with aminodiacetic acid to produce a weak-acid functionalized polymer. The weak-acid functionalized polymer was ground via milling in the presence of alumina grinding media to a mean particle size of less than 500 nm.

A metal-loaded polymer suspension was formed by combining 9.15 g of copper nitrate (Cu(NO₃)₂·2.5H₂O), 24.98g of the ground weak-acid functionalized polymer in the ammonium ion form and 337.02 g of deionized water. The suspension was stirred for 2 hours. The pH of the solution was buffered to 4.5 by the addition of ammonium acetate (NH₄OAc).

### Barium and Yttrium Loading

A metal-loaded emulsion polymer was formed by stirring 500g of a 10.8 percent by weight aqueous emulsion of a sulfonated emulsion polymer having a monomer composition of 87 percent by weight styrene and 13 percent by weight divinylbenzene (average particle size of 230 nm), and adding, dropwise, an aqueous solution of two metal ions prepared by dissolving 6.85g of barium nitrate, Ba(NO₃)_{2,} and 5.02g of yttrium nitrate, Y(NO₃)₃·6H₂O, in a minimum amount of deionized water. The metal-loaded emulsion polymer was stirred and the pH was adjusted to within the range of from 5-6 with ammonium hydroxide. The emulsion was stirred for an additional 2 hours.

The metal-loaded polymer suspension and the metal-loaded emulsion polymer were mixed together to form a metal-loaded polymer mixture. To the metal-loaded polymer mixture was added 15 ml of a 9.57 percent by weight aqueous emulsion of a methyl chloride quaternized emulsion polymer (average particle size of 150 nm) having a monomer composition of 60 percent by weight dimethylaminoethylmethacrylate, 35 percent by weight styrene and 5 percent by weight divinylbenzene to form a filterable flocced mass. The flocced mass, a pale blue solid, was collected by filtration and dried at 40°C under vacuum overnight. 4.16 liters of filtrate was collected, analyzed by inductively coupled plasma spectroscopy ("ICP") and found to contain 0.19 ppm of yttrium, 5.39 ppm of barium, 0.16 ppm of copper. Thus the metal-loaded polymer mixture contained 1.16 g of yttrium, 3.58 g of barium and 2.50 g of copper. The target molar ratio for YBa₂Cu₃O₍₇₋ₓ₎ superconductor is 1:2:3. The ratio obtained in this example was 1.0:1.99:3.0.

2.236 g of the dried metal-loaded polymer mixture prepared above was placed in a magnesium oxide crucible and heated in air at a rate of 20°C/minute to a temperature of 350°C and maintained at that temperature for 1 hour, then heated at the same rate to a temperature of 500°C and maintained at that temperature for 2 hours and finally heated at the same rate to a temperature of 750°C and maintained at that temperature for 1 hour. The sample was then allowed to cool to room temperature. 0.334 g of black powders of inorganic compounds, representing an overall yield of 14.9%, was obtained.

The powder prepared above was pressed into a 12.7 millimeter diameter by 3.2 millimeter thick pellet and heated in oxygen at 750°C for one hour followed by heating at 910°C for 1 hour. The sample was then allowed to cool in air to room temperature. Four electrodes were attached to the top surface of the pellet approximately 6 millimeters apart. Current was applied across the pellet and the voltage was measured as the sample was cooled in liquid nitrogen. At liquid nitrogen temperature, no resistance was detected, and no magnetic susceptibility was observed.

### Example 3 - Two Polymers, One Loaded with a Single Metal Complex, the Other Loaded with Two Metal Ions

### Pt/Strong Base Polymer

To a flask containing 0.50 g of platinum as an aqueous hexachloroplatninc acid solution was added 261.23 g of a 9.57 percent by weight aqueous emulsion of a methyl chloride quaternized emulsion polymer (average particle size of 150 nm) having a monomer composition of 60 percent by weight dimethylaminoethylmethacrylate, 35 percent by weight styrene and 5 percent by weight divinylbenzene to form a first metal-loaded polymer.

### Ce/Al/Weak Acid Polymer

A neutralized polymer emulsion was formed by adding to a second flask: (a) 303.83 g of a 16.45 weight percent aqueous emulsion of an emulsion polymer (average particle size of 103 nm) having a monomer composition of 40 percent by weight of methacrylic acid, 60 percent by weight of ethylacrylate and 5 percent by weight of allylmethacrylate, and (b) 150 ml of 1.0 M aqueous NH₄OH. To the neutralized polymer emulsion was pipetted 5.0 g of cerium as an aqueous cerium nitrate solution and 0.045g of aluminum as an aqueous aluminum nitrate solution to form a second metal-loaded polymer emulsion containing two metals. The contents of the flask were mixed by placing the flask on a shaker for 30 minutes.

To a beaker containing 122.11 g of the second metal-loaded polymer emulsion was added dropwise 30 g of the first metal-loaded polymer emulsion. Water was also added to avoid excess thickening of mixture, and the pH of the emulsion was maintained at a pH of 8.0 by the addition of ammonium hydroxide. A floc formed which was collected by filtration and then dried overnight in an oven at 110°C. 800 milliliters of filtrate was collected, analyzed by ICP and found to contain 1.47 ppm of platinum and 0.05 ppm of cerium, indicating that the metal complex and metal ions are still complexed with the polymers.

The powder was heated in air at a temperature of 250°C for one hour, then heated in air at a temperature of 350°C for an hour, then heated in air at a temperature of 500°C for four hours. The sample was then divided into portions which were further heated in air to the temperatures shown in Table 1 below.

The data reported in Table 1, below, are crystallite size (reported in nanometers) determined by the XRD powder patterns of the samples prepared according to the procedure of Example 3 and heated in air at the temperatures and times shown.

**TABLE 1**

| **Temperature** | **Time** | **Ceria** | | **Platinum** |
|---|---|---|---|---|
| | | 2Q = 28.4° | 2Q = 32.8° | 2Q = 39.7° |
| 500°C | 4 hour | 4.1 | 3.8 | 9.0 |
| 800°C | 1 hour | 10.3 | 9.8 | 33.6 |
| 1000°C | 1 hour | 37.3 | 36.7 | 80.4 |

The data in Table 1 show that the present invention can be used to generate powders of inorganic compounds of a combination of metals and metal oxides using metal loaded-polymers contain different metal species.

### Example 4 - Two or More Metals Loaded into Two Polymers: Ground Ion Exchange Polymer and Strong Acid Emulsion Polymer

### Rh/Ground Ion Exchange Polymer

An amineborane functionalized styrene/divinyl benzene suspension polymer was prepared according to the method described in United States Patent Number 4,355,140 to Manziek. A sample of the polymer was finely ground then ultrafiltered through a column having a molecular weight cutoff of 500,000. To a flask equipped with a magnetic stirrer was added 244.14 g of the ground, ultrafiltered polymer (average particle size of 300 nm) and 0.125 g of rhodium as an aqueous rhodium trichloride solution. The contents of the flask were stirred to form a first metal-loaded polymer mixture.

### Zr & Y/Strong Acid Polymer

A second metal-loaded polymer emulsion was formed by stirring 500 g of a 10.8 percent by weight aqueous emulsion of a sulfonated emulsion polymer having a monomer composition of 87 percent by weight styrene and 13 percent by weight divinylbenzene (average particle size of 230 nm), and adding, dropwise, two metal ion solutions: 4.425 g of zirconium as an aqueous zirconium sulfate solution and 0.150 g of yttrium as an yttrium nitrate solution. After the addition of the metal ion solutions, ammonium hydroxide was added to adjust the pH to within the range of from 3 to 4.

To a beaker containing 62.74 g of the second metal-loaded polymer emulsion was added dropwise 60 g of the first metal-loaded polymer mixture. Water was also added to avoid excess thickening of mixture. The mixture was flocced by adding a few drops of a quaternized emulsion as described in Example 2 and then dried overnight in an oven at 110°C. 900 liters of filtrate was collected, analyzed by ICP and found to contain less than 0.07 ppm of rhodium and less than 0.26 ppm of zirconium, indicating that the metal complex and metal ions are still complexed with the polymers.

The powder was heated in air at a temperature of 250°C for one hour, then heated in air at a temperature of 350°C for an hour, then heated in air at a temperature of 500°C for four hours. The sample was divided into portions which were further heated in air to the temperatures shown in Table 2 below.

The data reported in Table 2, below, are crystallite size (reported in nanometers) determined by the XRD powder patterns of the samples prepared according to the procedure of Example 4 and heated in air at the temperatures and times shown.

**Table 2**

| **Temperature** | **Time** | **Zirconia** | **Zirconia** |
|---|---|---|---|
| | | 2Q = 30.3° (tetragonal/cubic) | 2Q = 28.1° (monoclinic) |
| 500°C | 4 hours | 3.7 | not detected |
| 800°C | 1 hour | 23.1 | 46.0 |
| 1000°C | 1 hour | not detected | 210 |

Analysis of the XRD indicated that the zirconia formed by this process was predominately in the tetragonal crystalline phase, cubic crystalline phase or a combination thereof. These forms are considered thermodynamically unstable at room temperature in the absence of a phase stabilizer such as yttria. Thus, the data indicate that the zirconia powder is phase stabilized as a result of phase stabilizing components within the zirconia powder.

## Claims

1. A method for making a powder of inorganic compounds, comprising:
(a) forming one or more metal-loaded polymers by loading one or more soluble metal compounds into each of one or more polymers, wherein each of the one or more polymers has a particle size in the range of from 10 nanometers to 15,000 nanometers;
(b) removing the one or more polymers to form a powder of inorganic compounds.

2. The method of claim 1, wherein the polymer is selected from the group consisting of emulsion polymers and ground suspension polymers.

3. The method of claims 1 or 2, wherein the one or more soluble metal compounds is/are selected from the group consisting of metals, metal ions, metal complexes and mixtures thereof, and wherein:
(a) the metal is selected from the group consisting of platinum, palladium, rhodium, rhenium, ruthenium, osmium, iridium, cerium, zirconium, titanium, vanadium, molybdenum, tungsten, lanthanum, aluminum, yttrium, nickel, tin, bismuth, copper, cobalt, iron, silver, gold and mixtures thereof; and
(b) the metal ion is selected from the group consisting of Ce³⁺, Ni²⁺, Zr⁴⁺, La³⁺, Al³⁺, Y³⁺ and mixtures thereof; and
(c) the metal complex is selected from the group consisting of RuCl₃, RhCl₃, [PtCl₆]²⁻,[Pt(NH₃)₄]²⁺, [PdCl₄]²⁻, Fe(CO)⁴⁻, [Ru(NH₃)₆]³⁺, [MoO₄]²⁻, [Mo₆O¹⁹]²⁻ and mixtures thereof.

4. The method of any one of the preceding claims, wherein the polymer is removed by a process selected from the group consisting of pyrolysis, dissolution, chemical degradation, irradiation and sonication.

5. The method of any one of the preceding claims, wherein the polymer is removed by pyrolysis.

6. A powder of inorganic compounds prepared by the method of any one of the preceding claims.

7. A powder of inorganic compounds comprising zirconium oxide in a crystalline phase selected from tetragonal, cubic and a combination thereof, and wherein the zirconium oxide contains less than 3 percent by weight of any phase stabilizers.
